# EUROPEAN PATENT SPECIFICATION

(11) **EP 0 738 305 B1**
(45) Date of publication and mention of the grant of the patent: **18.02.1998**
(21) Application number: 94917195.3
(22) Date of filing: 18.05.1994
(51) Int. Cl.: C09D 175/16, C08G 18/67

(54) **RADIATION-CURABLE AQUEOUS URETHANE (METH)ACRYLATE DISPERSIONS BASED ON ISOCYANATES, (METH)ACRYLATE MONOMERS AND AN INTERNAL EMULSIFIER**
DURCH STRAHLEN VERNETZBARE WÄSSRIGE URETHAN(METH)- ACRYLATDISPERSIONEN BASIEREND AUF ISOCYANATEN, (METH)ACRYLATMONOMEREN UND EINEM INTERNEN EMULGIERMITTEL
DISPERSIONS AQUEUSES D'URETHANE (METH)ACRYLATE DURCISSABLES PAR RAYONNEMENT, A BASE D'ISOCYANATES, DE MONOMERES DE (METH)ACRYLATE ET D'UN EMULSIFIANT INTERNE

(43) Date of publication of application: 23.10.1996
(73) Proprietor: DSM N.V., 6411 TE Heerlen (NL)
(72) Inventor: WESTERHOF, Henk, NL-8012 BB Zwolle (NL); WEHMAN, Erik, NL-3831 HH Leusden (NL); RIETBERG, Johan, NL-8042 NR Zwolle (NL)
(86) International application number: NL9400113
(87) International publication number: WO9429398

(56) References cited:
- EP-A- 0 381 862
- EP-A- 0 507 053
- DATABASE WPI Week 8816, Derwent Publications Ltd., London, GB; AN 107705 'EMULSIFIER FOR AQUEOUS RESIN DISPERSING BODY' & JP,A,63 054 930 (DAIICHI KOGYO) 9 March 1988
- DATABASE WPI Week 7814, Derwent Publications Ltd., London, GB; AN 26236 'AQUEOUS COATING COMPOSITION FORMING HARD RIGID FILM' & JP,A,53 019 349 (KANSAI PAINT) 22 February 1978

## Description

The invention relates to radiation-curable aqueous urethane (meth)acrylate dispersions based on isocyanates, (meth)acrylate monomers and an internal emulsifier.

Such dispersions are described by Oldring in 'Chemistry and Technology of UV and EB formulation for coatings, inks and paints' (Volume 2, 1991, pp. 185-206).

A drawback of these dispersions is that they result in coatings having an insufficient scratch resistance and having an unsufficient resistance to chemical substances after curing.

The object of the invention is to provide a radiation-curable urethane(meth)acrylate dispersion which results in coatings having good scratch resistance, being resistant to chemical substances and having also other desired properties such as for example a good flow, sandability, gloss and emulsion stability.

The invention is characterised in that the internal emulsifier comprises (1-4) units of maleic anhydride (MA).

Preferably the emulsifier comprises (1-2) units of maleic anhydride. This emulsifier is radiation-curable.

Preferably, the emulsifier also comprises alkylene oxide units.

Preferably the alkylene oxide is ethylene oxide. Other suitable alkylene oxides include, for example, propylene oxide and ethylene oxide/propylene oxide block copolymers.

The use of the emulsifier according to the invention ensures that the acrylate groups react with one another during the radiation curing of the film while the double bond (resulting from MA) in the emulsifier system also takes part in the reaction. As a result, a hard coating with a good resistance to chemical substances and good scratch resistance is obtained after curing. Moreover this coating can be very well sanded. Other desired properties, such as for example a good hardness, a good flow, and a good gloss are also obtained.

The incorporation of the reactive emulsifier according to the invention also results in an improved emulsion stability.

According to a preferred embodiment of the present invention the emulsifier is represented by formula (I): 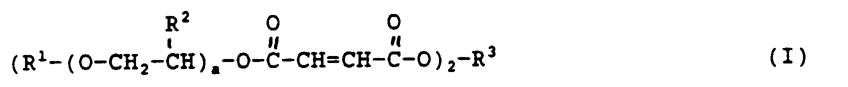 in which:
- a =: 5-50,
- R¹ =: (C₁-C₄) alkyl,
- R² =: H or CH₃,
- and R³ =: 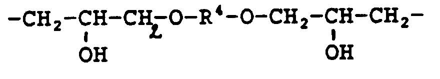
in which
- R⁴ =: (C₆-C₇₅) aromatic compound,
(C₆-C₇₅) cycloalkyl or
(C₆-C₇₅) alkyl and
the aromatic compound, cycloalkyl and alkyl are based on diglycidyl compounds.

The preparation of the emulsifier system according to formula (I) can take place by carrying out, in a first step, a reaction between an alkoxypolyalkylene glycol and maleic anhydride, at temperatures between 100°C and 200°C, preferably between 110°C and 130°C, for a period of preferably 1-3 hours. In a second step, the product obtained in the first step is then reacted with a diglycidyl ether, for 1-3 hours, at temperatures of between 100°C and 200°C, preferably between 140°C and 150°C.

Suitable alkoxypolyalkylene glycols include, for example, methoxypolyethylene glycol (MPEG), butoxypolyethylene glycol and alkoxy copolymers of ethylene glycol and propylene glycol.

Preferably use is made of MPEG. The molar weight is preferably between 500 and 1000.

Suitable diglycidyl ethers include for example the diglycidyl ether of bisphenol A, diglycidyl ether of butane diol, diglycidyl ether of neopentyl glycol and the diglycidyl ether of cyclohexane dimethanol.

Preferably use is made of the diglycidyl ether of bisphenol A.

The molar ratio alkoxypolyalkylene glycol to acid anhydride is usually between 1:0.9 and 1:1.1 and is preferably between 1:1.0 and 1:1.05. The molar ratio of the reaction product of alkoxypolyalkylene glycol and anhydride to diglycidyl ether is usually between 1:0.45 and 1:0.6 and is preferably between 1:0.50 and 1:0.55.

The reactions can be carried out either solvent-free or in the presence of solvents such as, for example, toluene, xylene and N-methylpyrrolidone. The reactions are preferably carried out in the absence of solvents.

The two reactions can be carried out either with or without catalysts. Suitable catalysts include, for example, tertiary amines such as for example dimethylbenzylamine and triethylamine, phosphines, phosphonium compounds and tetraalkylammonium halogenides such as for example tetramethylammonium bromide. The catalysts can be used in amounts of between, for example, 0.025 and 0.5 % by weight.

According to a preferred embodiment of the present invention, in formula (I):
- a =: 15-20,
- R¹ =: methyl,
- R² =: H
- and R³ =: 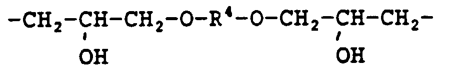
- in which R⁴ =: -(C₆H₄)-C₃H₆-(C₆H₄)-

According to another preferred embodiment of the present invention the emulsifier is represented by formula (II): 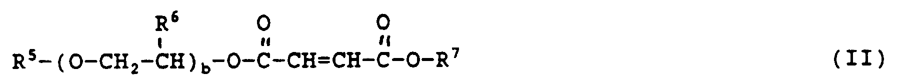 in which:
- b =: 5-50,
- R⁵ =: (C₁-C₄) alkyl,
- R⁶ =: H or CH₃,
- R⁷ =: 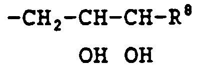
- in which R⁸ =: H or (C₁-C₄) alkyl.

The preparation of the emulsifier system according to formula (II) can take place by carrying out, in a first step, a reaction between an alkoxypolyalkylene glycol and maleic anhydride, at temperatures between 100°C and 200°C, preferably between 110°C and 130°C, for 1-3 hours. The reaction product obtained then reacts, in a second step, with an epoxy alcohol, for 1-3 hours, at temperatures between 100°C and 200°C, preferably at temperatures between 130°C and 140°C.

The alkoxypolyalkylene glycol used is preferably methoxypolyethylene glycol (MPEG). The molar weight is preferably between 500 and 1000. Other suitable alkoxypolyalkylene glycols are for example butoxypolyalkylene glycol and alkoxy copolymers of ethylene glycol and propylene glycol.

The epoxy alcohol used is preferably glycidol.

The molar ratio of alkoxypolyalkylene glycol to anhydride is usually between 1:0.9 and 1:1.1 and is preferably between 1:1.0 and 1:1.05. The molar ratio of the reaction product of alkoxypolyalkylene glycol and anhydride to epoxy alcohol is usually between 1:0.9 and 1:1.15 and is preferably between 1:1.0 and 1:1.1.

The two reactions can be carried out either with or without catalysts. Suitable catalysts include, for example, tertiary amines such as dimethylbenzylamine and triethylamine, phosphines, phosphonium compounds and tetraalkylammonium halogenides such as tetramethylammonium bromide. The catalysts can be used in amounts of between, for example, 0.025 and 0.5 wt.%.

The reactions can be carried out either solvent-free or in the presence of solvents such as for example toluene, xylene or N-methylpyrrolidone. The reactions are preferably carried out in the absence of a solvent.

According to a preferred embodiment of the present invention, in formula (II):
- b =: 15-20,
- R⁵ =: methyl,
- R⁶ =: H,
- R⁷ =: 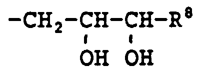
in which
- R⁸ =: H.

Urethane (meth)acrylate oligomers can for example be prepared via the reaction of diisocyanates, (meth)acrylate monomers containing hydroxyl groups and the emulsifier according to the present invention. To obtain certain desired properties diols and polyols may also be added in addition to said components.

The emulsifier precursor according to formula (I) or (II), mixed with the desired diols or polyols, may react with isocyanates, for 1-3 hours, at temperatures between 50°C and 100°C, preferably between 75°C and 85°C. The product obtained in the first step may react in a second step with the (meth)acrylate monomer containing hydroxyl groups, for 3 to 5 hours, at a temperature between 50°C and 100°C, preferably between 75°C and 85°C.

The product obtained (having a temperature of, for example, 75°C-85°C) is then dispersed in water having a temperature of between, for example, 20°C and 50°C. During the dispersing any isocyanate groups still present may react with water or diamine, which results in chain growth.

The molar ratio of the total of hydroxyl groups from the acrylate monomers, diols, polyols and emulsifier to the isocyanate groups molar ratio is usually between 0.6 and 1.2 and is preferably between 0.95 and 1.

The reactions described may optionally be carried out in the presence of a solvent; it is however preferable to carry them out in the absence of solvents.

Suitable isocyanates may be both aromatic and aliphatic. Suitable aromatic diisocyanates include, for example, toluene diisocyanate (TDI) and diphenylmethane diisocyanate (MDI). Suitable aliphatic diisocyanates include for example isophoron diisocyanate (IPDI), hexamethylene diisocyanate (HMDI) and oligomers of HMDI and hydrogenated MDI (H12-MDI). Aliphatic diisocyanates having aromatic rings such as, for example, tetramethylene xylene diisocyanate (TMXDI) and xylene diisocyanate (XDI) may also be used.

Preferably IPDI and TDI are used.

Suitable (meth)acrylate monomers containing hydroxyl groups include for example hydroxyethyl (meth)acrylate and hydroxypropyl acrylate.

Preferably hydroxyethyl acrylate is used.

Various polymers (having a molar weight of between approximately 500 and 4000) may be used as the diol, provided that they have terminal OH groups. Suitable polymers include for example polypropylene glycol, linear polyesters, polycaprolactones, polycarbonates or polytetrahydrofurans. In addition to these polymeric diols use may be made of low-molecular weight polyols. Suitable diols include for example 1,4-butanediol and 1,6-hexanediol. Suitable polyols include for example trimethylolpropane, pentaerythritol, dipentaerithritol and dimethylolpropane.

The alkylene oxide content of the synthesized product is generally between 0.5 and 50.0 wt.%.

The preparation of aqueous urethane acrylate dispersions is described by Oldring in 'Chemistry and Technology of UV and EB formulation for coatings, inks and paints', (Vol. 2, 1991, pp. 73-79) the disclosure of which is incorporated herein by reference.

The radiation curing of the urethane (meth)acrylate dispersion preferably takes place by means of UV or EB curing. Both curing methods are described by S.J. Bett et al. in the article 'UV and EB Curing' in Jocca (1990 (11), pp. 446-452) the disclosure of which is incorporated herein by reference.

The dispersions according to the invention may be used in the preparation of coatings which can be applied to various substrates such as, for example metal, wood, textile, leather, plastic and paper. Other fields of application include for example the ink and adhesive industries.

The emulsifiers according to the invention, in particular the emulsifier according to formula (I), may also be used in combination with other radiation-curable systems selected from dispersions based on epoxy acrylates and polyester acrylates.

The present invention is illustrated with the aid of the following, non-restrictive, examples.

### Example I

### Preparation of an emulsifier system according to formula (I)

714 parts by weight of methoxypolyethylene glycol (MPEG) and 98 parts by weight of maleic acid anhydride (MA) were heated to 120°C in a vessel provided with a stirrer, under nitrogen. After 3 hours at 120°C (at an acid number of 71 mg of KOH/g of resin) 188 parts by weight of diglycidyl ether of bisphenol (Epikote 828™) were added. After 2 hours at 145°C an acid number of < 5 was reached.

The reaction product had the following constants:
hydroxyl value: 58 mg of KOH/g of resin;
acid number: < 5 mg of KOH/g of resin.

### Example II

### Preparation of an emulsifier system according to formula (II)

804 parts by weight of methoxypolyethylene glycol (MPEG) and 111 parts by weight of maleic anhydride (MA) were heated to 120°C under nitrogen in a vessel provided with a stirrer. After 3 hours at 120°C (at an acid number of 71) 85 parts by weight of glycidol were added. After 2 hours at 135°C an acid number of < 5 was reached.

The reaction product had the following constants:
hydroxyl value: 120 mg of KOH/g
acid number: < 5 mg of KOH/g.

### Example III

### Preparation of an urethane acrylate dispersion

155 parts by weight of the emulsifier system according to Example I, 24 parts by weight of trimethylolpropane (TMP) and 153 parts by weight of isophoron diisocyanate were mixed and the mixture was heated to 90°C. After 3 hours at 90°C, 68 parts of hydroxyethyl acrylate (HEA) were added dropwise to the mixture, which had an NCO content of 8.7%. After 5 hours' reaction at 90°C the NCO content was 1%. Then the product was pumped into a dispersing vessel, into which 600 parts by weight of demineralized water had been introduced. Chain growth subsequently took place. The dispersion was drained at an NCO content of 0%.

### Example IV

### Preparation of a urethane acrylate dispersion

134 parts by weight of the emulsifier system according to Example II, 21 parts by weight of trimethylolpropane (TMP) and 168 parts by weight of isophoron diisocyanate were mixed and the mixture was heated to 90°C. After 3 hours at 90°C 77 parts of hydroxyethyl acrylate (HEA) were added dropwise to the mixture, which had an NCO content of 9.8%. After 5 hours' reaction at 90°C the NCO content was 1%. Then the product was pumped to a dispersing vessel, into which 600 parts by weight of demineralized water had been introduced. Chain growth subsequently took place. The dispersion was drained at an NCO content of 0%.

### Example V

### UV curing

4% by weight solid substance of a 3.2 gram of 50% solution of 1-hydroxycyclohexylphenylketone (Irgacure 184™) in ethanol was added to 100 grams of the dispersion according to Example III. This dispersion was applied to a wooden panel with the aid of a 30-pm wire coater. This was then dried for 5 min. at 50°C to evaporate the water, after which crosslinking took place as a result of irradiation using a medium-pressure Hg lamp (dose 750 mJ/cm²). Two layers were applied, the first of which was sanded with sandpaper after application.

The characteristics of the coating are summarized in Table 1.

**TABLE 1**

| | |
|---|---|
| particle size: | 80 nm |
| weight per unsaturation: | 510 |
| König hardness (1) | 125 |
| scratch resistance (2) | 1 |
| resistance to ethanol (3) | 1 |
| resistance to xylene (3) | 0 |
| resistance to coffee (3) | 0 |

| | |
|---|---|
| (1) determined by DIN 53157 | |
| (2) determined visually using a wire-brush: 0 = very good 1 = good 2 = satisfactory 3 = moderate 4 = poor | |
| (3) determined according to DIN 68 861-1A: 0 = very good 1 = good 2 = satisfactory 3 = moderate 4 = poor | |

These examples show that the internal emulsifier according to the present invention results in a good scratch resistance and a good resistance to chemical substances of the radiation-cured coating.

## Claims

1. Radiation-curable aqueous urethane (meth)acrylate dispersion based on isocyanates, (meth)acrylate monomers containing hydroxyl groups and an internal emulsifier, characterised in that the internal emulsifier comprises (1-4) units of maleic anhydride.

2. Dispersion according to claim 1, characterised in that the emulsifier comprises alkylene oxide units.

3. Dispersion according to any one of claims 1-2, characterised in that the emulsifier is represented by formula (I): 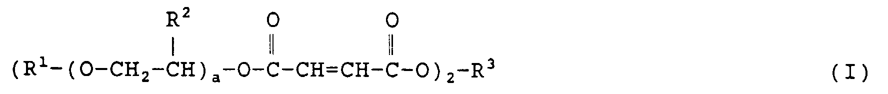 in which:
a = 5-50,
R¹ = (C₁-C₄) alkyl,
R² = H or CH₃
and R³ = 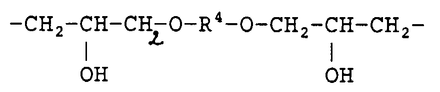
in which
R⁴ = (C₆-C₇₅) aromatic compound,
(C₆-C₇₅) cycloalkyl or
(C₆-C₇₅) alkyl and
where the aromatic compound, cycloalkyl and alkyl are based on diglycidyl compounds.

4. Dispersion according to claim 3, characterised in that in formula (I):
a = 15-20,
R¹ = methyl,
R² = H
and R³ = 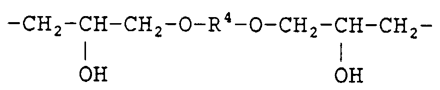
in which R⁴ = -(C₆H₄)-C₃H₆-(C₆H₄)-.

5. Use of the emulsifier according to any one of claims 1-4 in the preparation of radiation-curable systems, selected from dispersions based on urethane (meth)acrylates, epoxy acrylates and polyester acrylates.

6. Use of the emulsifier according to formula (I) of any one of claims 3-4, in the preparation of radiation-curable systems, selected from dispersions based on urethane (meth)acrylates, epoxy acrylates and polyester acrylates.

7. Use of a dispersion according to any one of claims 1-4 in the preparation of coatings.

8. Coating based on a dispersion according to any one of claims 1-4.

9. Entirely or partly coated substrate, characterised in that the substrate is coated with a coating according to claim 8.

## Patentansprüche

1. Strahlungshärtbare wässerige Urethan(meth)acrylat-Dispersion auf der Basis von Isocyanaten, (Meth)acrylat-Monomeren, die Hydroxyl-Gruppen und einen internen Emulgator enthalten, dadurch gekennzeichnet, daß der interne Emulgator (1 bis 4) Maleinsäureanhydrid-Einheiten umfaßt.

2. Dispersion nach Anspruch 1, dadurch gekennzeichnet, daß der Emulgator Alkylenoxid-Einheiten umfaßt.

3. Dispersion nach Anspruch 1 oder 2, dadurch gekennzeichnet, daß der Emulgator die Formel (I) aufweist: 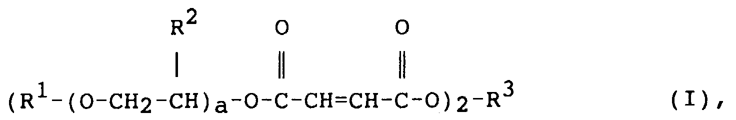 worin a = 5 bis 50; R¹ = C₁-C₄-Alkyl; R² = H oder CH₃; und R³ = 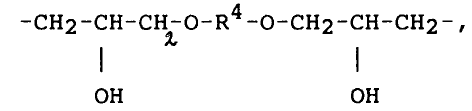 wobei R⁴ = eine C₆-C₇₅-aromatische Verbindung, C₆-C₇₅-Cycloalkyl oder C₆-C₇₅-Alkyl, und wobei die aromatische Verbindung, das Cycloalkyl und das Alkyl auf Diglycidyl-Verbindungen basieren.

4. Dispersion nach Anspruch 3, dadurch gekennzeichnet, daß in Formel (I) a = 15 bis 20; R¹ = Methyl; R² = H; und R³ = 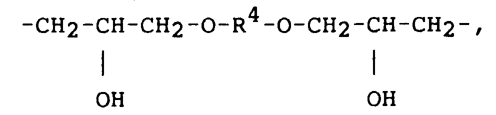 wobei R⁴ = -(C₆H₄)-C₃H₆-(C₆H₄)-.

5. Verwendung des Emulgators nach einem der Ansprüche 1 bis 4 bei der Herstellung strahlungshärtbarer Systeme, ausgewählt aus Dispersionen auf der Basis von Urethan(meth)acrylaten, Epoxyacrylaten und Polyesteracrylaten.

6. Verwendung des Emulgators der Formel (I) nach Anspruch 3 oder 4 bei der Herstellung strahlungshärtbarer Systeme, ausgewählt aus Dispersionen auf der Basis von Urethan(meth)acrylaten, Epoxyacrylaten und Polyesteracrylaten.

7. Verwendung einer Dispersion nach einem der Ansprüche 1 bis 4 bei der Herstellung von Beschichtungen.

8. Beschichtung auf der Basis einer Dispersion nach einem der Ansprüche 1 bis 4.

9. Gänzlich oder teilweise beschichtetes Substrat, dadurch gekennzeichnet, daß das Substrat mit einer Beschichtung nach Anspruch 8 beschichtet ist.

## Revendications

1. Dispersion aqueuse d'uréthane (méth)acrylate réticulable par rayonnement à base d'isocyanates, de monomères (méth)acrylate contenant des groupes hydroxyle et d'un émulsifiant interne, caractérisée en ce que l'émulsifiant interne comprend (1-4) unités d'anhydride maléique.

2. Dispersion selon la revendication 1, caractérisée en ce que l'émulsifiant comprend des unités d'oxyde d'alcoylène.

3. Dispersion selon l'une quelconque des revendications 1 et 2, caractérisée en ce que l'émulsifiant est représenté par la formule (I) : 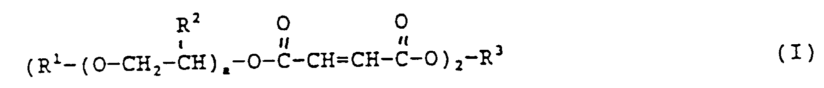 dans laquelle :
a = 5-50
R¹ = un groupe alcoyle en C₁-C₄
R² = H ou CH₃
et R³ = 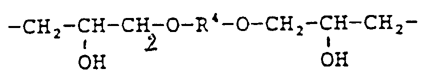
où
R⁴ = un composé aromatique en C₆-C₇₅,
un groupe cycloalcoyle en C₆-C₇₅ ou
un groupe alcoyle en C₆-C₇₅ et
où le composé aromatique et les groupes cycloalcoyle et alcoyle sont à base de composés diglycidyliques.

4. Dispersion selon la revendication 3, caractérisée en ce que dans la formule (I) :
a = 15-20,
R¹ = un groupe méthyle,
R² = H
et R³ = 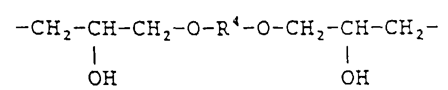
où R₄ = -(C₆H₄)-C₃H₆-(C₆H₄)-.

5. Utilisation de l'émulsifiant selon l'une quelconque des revendications 1-4 dans la préparation de systèmes réticulables par rayonnement, choisis parmi des dispersions à base d'uréthane (méth)acrylates, d'époxy acrylates et de polyester acrylates.

6. Utilisation de l'émulsifiant de formule (I) selon l'une quelconque des revendications 3-4 dans la préparation de systèmes réticulables par rayonnement, choisis parmi des dispersions à base d'uréthane (méth)acrylates, d'époxy acrylates et de polyester acrylates.

7. Utilisation d'une dispersion selon l'une quelconque des revendications 1-4 dans la préparation de revêtements.

8. Revêtement à base d'une dispersion selon l'une quelconque des revendications 1-4.

9. Substrat entièrement ou partiellement revêtu, caractérisé en ce que le substrat est revêtu d'un revêtement selon la revendication 8.
